# EUROPEAN PATENT SPECIFICATION

(11) **EP 4 145 053 B1**
(45) Date of publication and mention of the grant of the patent: **11.09.2024**
(21) Application number: 21795812.3
(22) Date of filing: 30.04.2021
(51) Int. Cl.: F24F 11/41, F24F 11/43, F24F 11/65, F24F 11/67, F24F 11/00, F24F 110/20

(54) **CONTROL METHOD OF AIR CONDITIONING SYSTEM**
STEUERUNGSVERFAHREN FÜR EINE KLIMAANLAGE
PROCÉDÉ DE COMMANDE D'UN SYSTÈME DE CLIMATISATION

(30) Priority: 30.04.2020 CN 202010367235
(43) Date of publication of application: 08.03.2023
(73) Proprietor: Daikin Industries, Ltd., Osaka-Shi, Osaka 530-0001 (JP)
(72) Inventor: YANG, Zhenghua, Shanghai, 201108 (CN); WANG, Di, Shanghai, 201108 (CN); XU, Yangyang, Shanghai, 201108 (CN); LIU, Xuan, Shanghai, 201108 (CN)
(74) Representative: Hoffmann Eitle
(86) International application number: PCT/JP2021/017156
(87) International publication number: WO 2021/221151

(56) References cited:
- EP-A1- 2 088 381
- WO-A1-2008/056692
- CN-A- 110 887 163
- JP-A- 2001 041 542
- JP-A- 2009 299 983
- KR-A- 20080 064 537

## Description

### TECHNICAL FIELD

The present invention relates to an air conditioning system control method, and more specifically to an air conditioning system control method for controlling an air conditioning system that inhibits the proliferation and propagation of bacteria and reduces the growth of mold.

### BACKGROUND ART

As is well known, when an air conditioner is used for a long period of time, dust adheres to the inside of an indoor unit, particularly to an indoor heat exchanger. Dust gives adequate nutrients for the proliferation of bacteria. After a cooling operation or a dehumidifying operation, a humidity inside the indoor unit increases to provide an environment excellent in the propagation of bacteria.

The proliferation and propagation of bacteria and the growth of mold inside the indoor unit cause air blown out of the indoor unit toward a room to seriously affect a user's health. The mold, when growing intensely inside the indoor unit, clogs an air hole (a blow-out path) in the indoor unit, which may decrease an amount of air to be blown out of the indoor unit and may constitute a hinderance to the performance and use of the air conditioner.

Consequently, the air conditioner industry is faced with technical issues of how to inhibit the proliferation and propagation of bacteria and how to reduce the growth of mold.

CN 109489189 A discloses a known method of cleaning an air conditioner, the method including: (S1) a condensation step of causing an air conditioner to carry out a cooling operation to form condensate on a surface of an indoor heat exchanger, thereby cleaning the surface of the indoor heat exchanger; (S2) a frost formation step of causing the air conditioner to carry out the cooling operation to form a frost layer on the surface of the indoor heat exchanger; (S3) a heating step of causing the air conditioner to carry out a heating operation to perform defrosting, thereby cleaning and sterilizing the surface of the indoor heat exchanger; and (S4) a ventilation step of operating an indoor unit in a ventilation mode to promptly dry the indoor heat exchanger and to decrease a temperature in the heat exchanger (see claim 1 and FIG. 4 of CN 109489189 A).

The foregoing method of cleaning the air conditioner disclosed in CN 109489189 A adjusts the operating state of the air conditioner, thereby executing the four steps of: condensation (i.e., removing floating dust on the surface of the indoor heat exchanger, with the condensate); frost formation (i.e., separating dust, impurities, and the like from the surface of the indoor heat exchanger); heating (i.e., defrosting, secondary cleaning; removing from the indoor heat exchanger the dust, impurities, and the like thus separated and sterilizing the indoor heat exchanger at high temperature); and ventilation (i.e., drying the indoor heat exchanger while decreasing the temperature of the indoor heat exchanger) in this order. This method thus cleans and sterilizes the inside of the air conditioner.

CN 110382969 A discloses a known air adjuster including: an indoor unit that includes an indoor heat exchanger and an indoor fan; and a control unit that controls the indoor fan, wherein the control unit carries out an indoor heat-exchange heat applying operation and, during the indoor heat-exchange heat applying operation, causes the indoor heat exchanger to function as a condenser and controls the indoor fan, thereby maintaining an indoor heat-exchange temperature which is a temperature of the indoor heat exchanger, at a predetermined first temperature or more and reducing the number of mold and bacteria in the indoor heat exchanger (see claim 1 of CN 110382969 A). In addition, the control unit carries out the indoor heat-exchange heat applying operation immediately after a state in which the indoor heat exchanger functions as an evaporator (e.g., immediately after a cooling operation) (see claim 2 of CN 110382969 A). The inside of the air adjuster is thus dried to reduce the number of mold and bacteria and to inhibit the propagation of mold and bacteria.

As is well known, the growth and propagation of mold can be classified into four stages of a spore stage, a cystoid spore germination stage, a mycelial growth stage, and a mold proliferation stage.

At the spore stage, spores, because of their thick and dense walls, have characteristics such as considerably high resistance to high temperature, to low temperature, and to radiation. Therefore, spores can survive even under a considerably disadvantageous environment. It is no exaggeration to say that spores have the highest vitality in the world. Spores are dispersed throughout a room through the flow of air, the movement of a person or animal, and the like and are gradually deposited on a surface of a wall body or building material. Spores in a wall body are mainly derived from a building material itself, air, or the like.

At an initial stage, these spores are in a dormant state. When the cystoid spores absorb adequate nutrients and a temperature and humidity in an environment reach appropriate conditions, the cystoid spores begin germinating (the cystoid spore germination stage), the mycelia grow (the mycelial growth stage), and the mold promptly begin propagating (the mold propagation stage). Vast propagation of mold results in formation of mold colonies.

With regard to mold growth conditions, some studies have revealed that the growth of mold pertains to elements such as a temperature, a humidity (a relative humidity), a nutrient, and a duration of exposure and, in particular, mainly pertains to a temperature and a humidity.

### (Temperature)

As for the majority of mold propagation, the optimum temperature range is 25°C to 30°C, the lowest temperature is 0°C or less, and the highest temperature is 30°C or more.

Within the temperature range suitable for the growth of mold, most kinds of mold undergo enhanced activation of intracellular proteins and enzymes with an increase in temperature, resulting in acceleration of biochemical reaction and improvement in a growth rate. In a case where the temperature exceeds a limit temperature of mold growth, the continuous increase in temperature may cause irreversible damage to temperature-sensitive components (e.g., proteins, nucleic acids, etc.) in the cell. When the temperature exceeds its optimum value, the growth rate decreases promptly with the increase in temperature.

### (Relative Humidity)

Microorganisms may be classified depending on growth suitability relative to humidity into:
(1) high-humidity (i.e., hygrophytic) microorganisms that require the lowest relative humidity of 90% or more for their growth;
(2) medium-humidity microorganisms that require the lowest relative humidity from 80% to 90% for their growth; and
(3) low-humidity (i.e., xerophytic) microorganisms that require the lowest relative humidity of 80% or less for their growth.

The majority of bacteria, yeast fungi, and some kinds of mold, such as Penicillium and Trichoderma, correspond to the hygrophytic microorganisms. Most of mold correspond to medium-humidity microorganisms. Some kinds of koji mold, such as Aspergillus glaucus, Aspergillus candidus, and Aspergillus terreus, correspond to the xerophytic microorganisms.

Typically, a mold cystoid spore is relatively resistant to drought and is therefore capable of surviving only for a certain period of time even under a dry environment. If the environment changes, the mold cystoid spore keeps growing after absorbing adequate moisture.

Examples of indoor mold may include mainly Aspergillus, Penicillium, and Trichoderma. As for Aspergillus, the mycelial growth rate becomes maximum at a humidity from 70% to 75%. As for Penicillium and Trichoderma, the growth rate becomes maximum at a humidity of approximately 90%. Typically, mold cystoid spores germinate only at a relative humidity more than 60%.

JP 2009-299983 A which is a prior application by the applicant discloses an influence of a relative humidity value on a process of inhibiting mold and bacteria and also discloses an inside cleaning operation control unit configured to switch from a stop state to a dry shock sate, thereby rapidly decreasing a humidity inside an indoor unit and efficiently inhibiting the propagation of mold and bacteria (see paragraphs [0004], [0075] and [0076] of JP 2009-299983 A).

According to CN 109489189 A and CN 110382969 A, although an indoor heat exchanger can be cleaned and dried, internal environments (particularly a temperature and a humidity) of an indoor unit cannot be adjusted; therefore, mold prevention and sterilization inside the indoor unit are insufficient. In other words, the propagation and survival environment of bacteria and mold are not destroyed, and the indoor heat exchanger can be cleaned only once.

Particularly in CN 110382969 A, a heating operation is carried out immediately after a cooling operation, which causes a large temperature difference in air to be blown out through a blow-out port. This configuration therefore makes a person in a room feel uncomfortable and fails to achieve energy saving.

Another example of the prior art can be seen in dd WO 2008/056692 A1. Accordingly, how to realize an air conditioning system control method capable of achieving mold prevention and sterilization by destroying the propagation and survival environment of bacteria and mold is a technical issue to be solved urgently.

### SUMMARY OF THE INVENTION

### <Technical Problem>

In order to solve the foregoing technical issue, an object of the present invention, which is defined in claim 1, is to provide an air conditioning system control method for controlling an air conditioning system that decreases a relative humidity inside an indoor unit within a predetermined time to destroy the propagation and survival environment of bacteria and mold, thereby achieving mold prevention and sterilization inside the indoor unit.

Another object of the present invention is to provide an air conditioning system control method for controlling an air conditioning system capable of efficiently achieving mold prevention and sterilization inside an indoor unit in an energy-saved manner.

### <Solution to Problem>

In order to achieve one or more inventive objects described above, a first aspect of the present invention provides an air conditioning system control method for controlling an air conditioning system including an outdoor unit, an indoor unit, and a control unit, the outdoor unit including a compressor and an outdoor heat exchanger, the indoor unit including an indoor heat exchanger, the compressor, the outdoor heat exchanger, and the indoor heat exchanger being connected with pipes to constitute a refrigerant circuit in which a refrigerant circulates, the control unit being configured to control constituent members of the refrigerant circuit in the air conditioning system and to execute a mold prevention operation mode, in which the mold prevention operation mode includes an inside humidity decrease stage, at the inside humidity decrease stage, when a preset condition is satisfied, the control unit controls the air conditioning system and starts up a humidity decrease process of decreasing a relative humidity, the humidity decrease process includes an air blowing operation of blowing air out of the indoor unit toward a room, and by the inside humidity decrease stage, a relative humidity inside the indoor unit is decreased within a predetermined time such that a ratio between the relative humidity and a relative humidity before the inside humidity decrease stage falls within a preset range that enables destruction of propagation and a survival environment of bacteria and mold.

According to the foregoing configuration, the mold prevention operation mode includes the inside humidity decrease stage. By the inside humidity decrease stage, furthermore, the relative humidity inside the indoor unit is decreased within the predetermined time such that the ratio between the relative humidity and the relative humidity before the inside humidity decrease stage falls within the preset range that enables destruction of the propagation and survival environment of bacteria and mold. This configuration therefore achieves real mold prevention inside the indoor unit, which is different from a simple one-time cleaning after propagation of bacteria and mold.

In addition, since the indoor unit is quickly dried before a mold cystoid spore germination period, the growth of mold is reset again. This configuration therefore inhibits germination of mold and considerably reduces the number of bacteria as compared with the number of bacteria in a case where an indoor unit is dried naturally.

According to the foregoing configuration, the control unit controls the air conditioning system. When the relative humidity before the inside humidity decrease stage is a preset value (e.g., a relative humidity of 80%) or more, the control unit executes the humidity decrease process of decreasing the relative humidity inside the indoor unit, from the relative humidity before the inside humidity decrease stage. In the rainy season, the continuous rainy weather, or the season with high humidity such as the rainy weather, or after the end of a long-hours cooling or dehumidifying operation in summer, the humidity (the relative humidity) inside the indoor unit already satisfies a high-humidity condition. In such a case, the control unit may control the air conditioning system to merely execute the humidity decrease process, and does not need to execute the humidity increase process prior to the humidity decrease process. This configuration therefore efficiently achieves mold prevention and sterilization inside the indoor unit in an energy-saved manner.

According to the first aspect of the present invention, the preset condition includes one of or at least two of a condition that the relative humidity inside the indoor unit reaches a predetermined value, a condition that a humidity of indoor air reaches a predetermined value, a condition that an integrated operating time of a cooling operation or a dehumidifying operation reaches a predetermined value, and a condition that an integrated time of continuous increase in environmental temperature reaches a predetermined value.

A second aspect of the present invention provides the air conditioning system control method according to the first aspect of the present invention, in which the inside humidity decrease stage of the mold prevention operation mode further includes a humidity increase process of increasing a humidity inside the indoor unit, and when the relative humidity before the inside humidity decrease stage is lower than the preset value, at the inside humidity decrease stage, the humidity increase process is executed, and then the humidity decrease process is executed.

According to the foregoing configuration, when the relative humidity before the inside humidity decrease stage does not reach (i.e., is less than) the preset value (e.g., the relative humidity of 80%), the inside of the air conditioner at this time is at a normal humidity and, in turn, is in a relatively dry state. In this case, although the inside humidity decrease process is executed, executing the humidity increase process and then executing the humidity decrease process may cause the ratio between the relative humidity inside the indoor unit subjected to the humidity decrease by the inside humidity decrease stage and the relative humidity before the inside humidity decrease stage to more advantageously fall within the preset range that enables destruction of the propagation and survival environment of bacteria and mold.

A third aspect of the present invention provides the air conditioning system control method according to the second aspect of the present invention, in which the humidity increase process includes a cooling operation, and during the cooling operation, the control unit controls the constituent members of the refrigerant circuit, including the compressor, to cause the indoor heat exchanger to function as an evaporator.

According the foregoing configuration, the cooling operation during which the indoor heat exchanger functions as an evaporator is carried out during the execution of the humidity increase process at the inside humidity decrease stage. Therefore, controlling the refrigerant that circulates in the refrigerant circuit by the compressor achieves humidity increase on the secondary side (the blow-out side) of the indoor heat exchanger, produces an advantageous effect of the humidity increase, and improves control accuracy. With this configuration, the inside humidity decrease stage causes the ratio between the relative humidity inside the indoor unit subjected to the humidity decrease by the inside humidity decrease stage and the relative humidity before the inside humidity decrease stage to more advantageously fall within the preset range that enables destruction of the propagation and survival environment of bacteria and mold.

A fourth aspect of the present invention provides the air conditioning system control method according to the third aspect of the present invention, in which the humidity increase process further includes a step of stopping the compressor after a lapse of the predetermined time.

According to the foregoing configuration, the compressor is stopped in the execution of the humidity increase process at the inside humidity decrease stage. Therefore, the moisture mainly on the secondary side of the indoor heat exchanger is dispersed to the primary side of the indoor heat exchanger to achieve humidity increase on the primary side (the suction side) of the indoor heat exchanger, that is, humidity increase inside the entire indoor unit. This configuration thus ensures the advantageous effects of the mold prevention and sterilization.

A fifth aspect of the present invention provides the air conditioning system control method according to the fourth aspect of the present invention, in which when the compressor stops, the control unit intermittently operates the indoor fan of the indoor unit.

A sixth aspect of the present invention provides the air conditioning system control method according to the fourth aspect of the present invention, in which the humidity increase process further includes a step of determining whether frost formation occurs in the indoor heat exchanger in a case of the cooling operation, when frost formation occurs in the indoor heat exchanger, the indoor fan of the indoor unit is continuously operated, and/or when no frost formation occurs in the indoor heat exchanger, the indoor fan of the indoor unit is stopped.

According to the foregoing configuration, the indoor fan is intermittently operated during the execution of the humidity increase process at the inside humidity decrease stage. Alternatively, in the case of the cooling operation, the control unit determines whether frost formation occurs in the indoor heat exchanger. When frost formation occurs in the indoor heat exchanger, the indoor fan is continuously operated. This configuration therefore achieves prompt defrosting and promptly increases an inside humidity. When no frost formation occurs in the indoor heat exchanger, the indoor fan is stopped. This configuration therefore adequately mixes airflows inside the indoor unit and increases the humidity inside the entire air conditioner. Adjusting the operating state of the indoor fan in accordance with the specific state of the indoor heat exchanger improves control accuracy, achieves energy saving, advantageously stabilizes the air conditioning system, and ensures user's comfortability.

A seventh aspect of the present invention provides the air conditioning system control method according to the sixth aspect of the present invention, in which the humidity decrease process further includes a heat applying operation, and during the heat applying operation, the control unit controls the constituent members of the refrigerant circuit, including the compressor, to apply heat by causing the indoor heat exchanger to function as a condenser or the control unit controls a heat applying member to apply heat.

During the execution of the humidity decrease process at the inside humidity decrease stage, the control unit carries out the air blowing operation to decrease the relative humidity inside the indoor unit, without carrying out the heat applying operation. Carrying out the air blowing operation promptly and effectively decreases the humidity inside the indoor unit, which makes a user comfortable without increasing a temperature of air to be blown out of the indoor unit.

According to the foregoing configuration, both the air blowing operation and the heat applying operation are carried out. Carrying out the heat applying operation achieves further dry and mold prevention and produces more preferable advantageous effects of sterilization.

An eighth aspect of the present invention provides the air conditioning system control method according to the seventh aspect of the present invention, in which during the heat applying operation, the control unit intermittently operates the indoor fan of the indoor unit.

According to the foregoing configuration, when the heat applying operation is carried out in the execution of the humidity decrease process at the inside humidity decrease stage in the mold prevention operation mode, the air inside the indoor unit is undesirably heated. In the case of the heat applying operation, the control unit intermittently operates the indoor fan. This configuration thus increases a temperature difference in air to be blown out of the indoor unit and prevents user's health from being affected.

A ninth aspect of the present invention provides the air conditioning system control method according to the first aspect of the present invention, in which the relative humidity inside the indoor unit is decreased to be not more than 0.5 times the relative humidity before the inside humidity decrease stage, within the predetermined time.

The foregoing configuration ensures an advantageous effect of mold prevention inside the indoor unit and improves control accuracy, without imposing an excessive load on the air conditioner.

A tenth aspect of the present invention provides the air conditioning system control method according to the first aspect of the present invention, in which the air conditioning system further includes a humidity sensor, and the humidity sensor is disposed near the indoor heat exchanger, near a suction port in the indoor unit, near a blow-out port in the indoor unit (200), or in a space to be adjusted. According to the foregoing configuration, the relative humidity inside the indoor unit is directly acquired or calculated from the detection data by the humidity sensor. Therefore, the control unit causes, for example, the humidity sensor to detect a temperature inside the indoor unit (a relative humidity at startup, a humidity adjustment value subjected to humidity increase by a present predetermined cycle in the humidity increase process, or a relative humidity in the humidity decrease process) in real time. This configuration enables an immediate response to a change in temperature inside the indoor unit, the change being fed back from the humidity sensor. This configuration thus improves control accuracy.

An eleventh aspect of the present invention provides the air conditioning system control method according to any one of the first to tenth aspects of the present invention, in which the air conditioning system includes a plurality of the indoor units, and at least one of or all the indoor units executes or execute the mold prevention operation mode.

According to the foregoing configuration, all the indoor units execute the mold prevention operation mode at the same time. This configuration thus avoids an excessively complicated determination process and switching process by an actuator and collectively completes the mold prevention and sterilization for the entire air conditioning system. Moreover, some of the indoor units execute the mold prevention operation mode. In particular, the indoor units execute the mold prevention operation mode as necessary or individually depending on the use frequency of the different indoor units. This configuration thus avoids unnecessary redundant mold prevention and sterilization for an indoor unit where no mold propagates. The air conditioning system thus becomes more intelligent and achieves energy saving. On the other hand, this configuration achieves early mold prevention and sterilization for an indoor unit where mold has already propagated. This configuration therefore avoids an adverse influence on a user's health owing to air blown out of some indoor units where mold has already propagated.

A twelfth aspect of the present invention provides the air conditioning system control method according to the eleventh aspect of the present invention, in which when at least one of the indoor units which is an operative device executes the mold prevention operation mode, the remaining indoor units which are non-operative devices stop operating.

According to the foregoing configuration, the non-operative devices stop operating when the operative device executes the mold prevention operation mode. This configuration therefore achieves further energy saving in the entire air conditioning system and ensures an advantageous effect of mold prevention. In this case, as to actuator control, in the humidity decrease process, an electric valve, such as an expansion valve, in the indoor unit (non-operative device) that does not execute the mold prevention operation mode is closed. This configuration thus prevents an increase in temperature of a room where the non-operative device is present or prevents the temperature from increasing more than necessary. Alternatively, the electric valve is slightly opened to prevent the compressor in the air conditioning system from becoming short of the refrigerant. This configuration thus ensures safety and stability in performance of the air conditioning system.

A thirteenth aspect of the present invention provides the air conditioning system control method according to the eleventh aspect of the present invention, in which the air conditioning system starts up the mold prevention operation mode of a non-operative device among the plurality of indoor units and/or ends the mold prevention operation mode of an operative device among the plurality of indoor units, based on a received command.

According to the foregoing configuration, in a case of a multifunctional air conditioner, the air conditioning system starts up the non-operative device and/or ends the mold prevention operation mode, in accordance with a user's request (e.g., a request issued from an external control device). Control with priority on user's comfortability is thus performed based on the preferential command from the user.

A fourteenth aspect of the present invention provides the air conditioning system control method according to any one of the first to tenth, twelfth, and thirteenth aspects of the present invention, in which the control unit of the air conditioning system includes an external control device that displays an operating state in the mold prevention operation mode.

According to the foregoing configuration, for example, an external control device such as a wired controller or a mobile terminal application may display the operating state in the mold prevention operation mode. This configuration therefore achieves visualization of the operating mode and causes the user to intuitively grasp the progress of the mode.

### BRIEF DESCRIPTION OF THE DRAWINGS

FIG. 1 is a schematic diagram of a pipeline in an air conditioning system to which an air conditioning system control method according to an embodiment of the present invention is applied.
FIG. 2 is a main flowchart of an inside humidity decrease stage in a mold prevention operation mode of the air conditioning system control method according to the embodiment of the present invention.
FIG. 3 is a sub-flowchart of a humidity increase process at the inside humidity decrease stage in the mold prevention operation mode of the air conditioning system control method according to the embodiment of the present invention.

### DESCRIPTION OF EMBODIMENTS

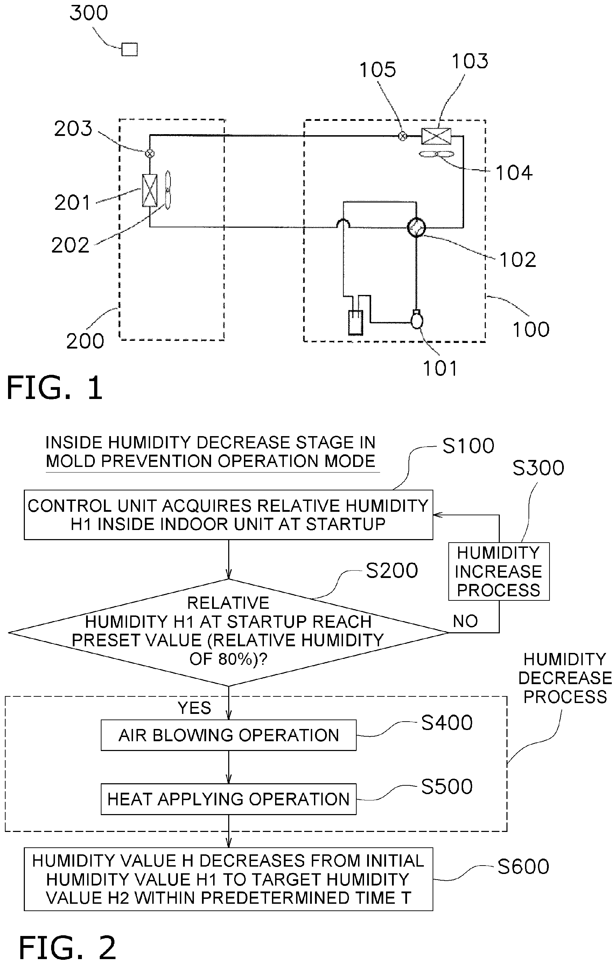

With reference to FIG. 1, first, a brief description will be given of an air conditioning system 1 to which an air conditioning system control method according to an embodiment of the present invention is applied. FIG. 1 is a schematic diagram of a pipeline in an air conditioning system to which an air conditioning system control method according to an embodiment of the present invention is applied.

The air conditioning system 1 includes an outdoor unit 100 and an indoor unit 200. The air conditioning system 1 is capable of executing ordinary operation modes including a cooling operation mode, a heating operation mode, an air blowing operation mode, and the like and is also capable of executing a mold prevention operation mode (a combination of the ordinary operation modes). The mold prevention operation mode refers to consequently decreasing a relative humidity in an internal environment of the entire indoor unit 200 (i.e., drying the indoor unit 200). The mold prevention operation mode may be a combined operation mode that removes moisture from components of the indoor unit 200, such as an indoor fan 202, an indoor heat exchanger 201, and a drain pan (not illustrated), thereby achieving an object of destroying the propagation and survival environment of bacteria and mold. The mold prevention operation mode may also be a combined operation mode that blows moisture off the indoor heat exchanger 201 or causes moisture on the indoor heat exchanger 201 to drop off and evaporates moisture inside the indoor unit 200. However, the mold prevention operation mode is not intended to be interpreted in a narrower sense as being constituted with only an inside humidity decrease stage that decreases a humidity in an internal environment of an air conditioner. Conversely, the mold prevention operation mode should be broadly defined in a broader sense and may non-exclusively include an inside cleaning operation for removing mold grown on the indoor fan 202, indoor heat exchanger 201, or drain pan (not illustrated) inside the indoor unit 200.

The indoor unit 200 includes components such as the indoor fan 202, the indoor heat exchanger 201, and an electric valve (an indoor adjustment valve) 203. The outdoor unit 100 includes components such as a compressor 101, an outdoor fan 104, an outdoor heat exchanger 103, a flow channel switching valve 102, and an electric valve (an outdoor adjustment valve) 105. The compressor 101, outdoor heat exchanger 103, flow channel switching valve 102, and electric valve (outdoor adjustment valve) 105 inside the outdoor unit 100 as well as the indoor heat exchanger 201 inside the indoor unit 200 constitute a refrigerant circuit as main members.

The indoor fan 202 inside the indoor unit 200 rotates when being driven, so that a negative pressure at the suction side of the indoor fan 202 generates an airflow in a blowing direction. The indoor fan 202 is thus capable of taking in indoor air from a room, providing the air into the indoor unit 200, and blowing the air, subjected to heat exchange in the indoor heat exchanger 201, out of the indoor unit 200 toward the room.

The outdoor fan 104 inside the outdoor unit 100 rotates when being driven. During, for example, a cooling operation, the outdoor fan 104 takes in outdoor air and provides the air into the outdoor unit 100, so that the outdoor heat exchanger 103 performs heat radiation.

The air conditioner also includes a control unit 300 for controlling operations of the respective components inside the indoor unit 200 and outdoor unit 100. The control unit 300 controls the operations of the respective components, thereby executing the respective operation modes in the air conditioning system 1.

### <Mold Prevention Operation Mode>

The air conditioning system 1, when satisfying a preset condition, starts execution of the mold prevention operation mode. In this case, the air conditioning system 1 starts to execute the mold prevention operation mode. The mold prevention operation mode includes the inside humidity decrease stage. The mold prevention operation mode may non-exclusively include an inside cleaning operation for removing mold grown on the indoor heat exchanger 201 and/or drain pan inside the indoor unit 200. In a case where the mold prevention operation mode includes other operations in addition to the inside humidity decrease stage, the inside humidity decrease stage is executed last.

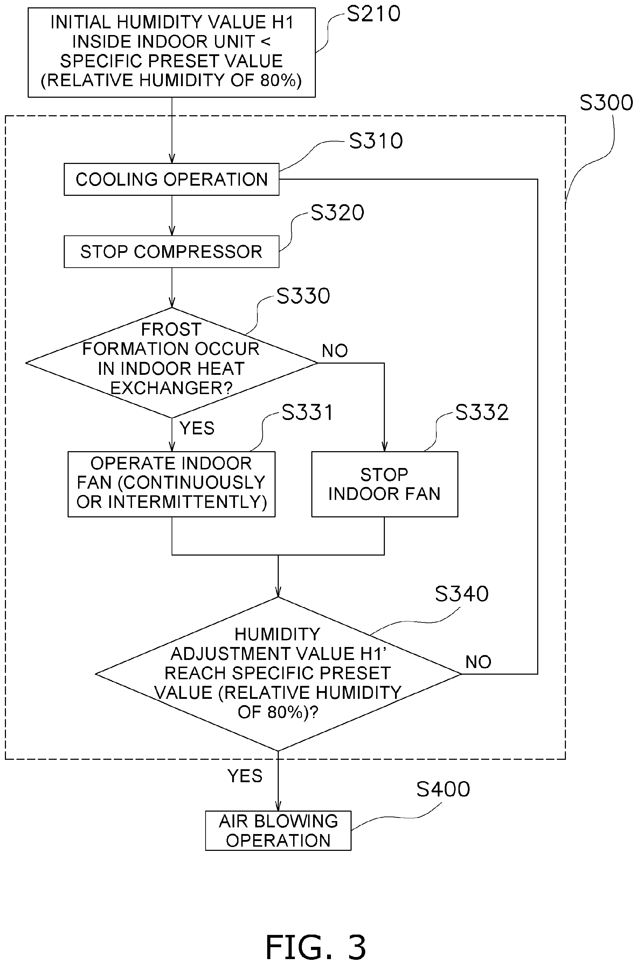

With reference to FIGS. 2 and 3, next, a description will be given of the inside humidity decrease stage in the mold prevention operation mode of the air conditioning system control method according to the embodiment of the present invention. FIG. 2 is a main flowchart of the inside humidity decrease stage in the mold prevention operation mode of the air conditioning system control method according to the embodiment of the present invention. FIG. 3 is a sub-flowchart of a humidity increase process at the inside humidity decrease stage in the mold prevention operation mode of the air conditioning system control method according to the embodiment of the present invention.

In the mold prevention operation mode, when the inside humidity decrease stage is executed, as illustrated in FIG. 2, first, in step S100, the control unit 300 acquires a relative humidity H1 inside the indoor unit 200 before the inside humidity decrease stage, that is, a relative humidity H1 at the start of the inside humidity decrease stage.

In step S200, next, the control unit 300 determines whether the acquired relative humidity H1 inside the indoor unit 200 at startup reaches a preset value (e.g., a relative humidity of 80%).

When the control unit 300 determines in step 5200 that the relative humidity H1 inside the indoor unit 200 at the startup is lower than the preset value (i.e., the relative humidity H1 does not reach the preset value) ("NO" in step S200; see step S210 in FIG. 3), then the control unit 300 carries out step S300 (the humidity increase process) to be described later with reference to FIG. 3.

On the other hand, when the control unit 300 determines in step 5200 that the relative humidity H1 inside the indoor unit 200 at the startup is the preset value or more (i.e., the relative humidity H1 reaches the preset value) ("YES" in step S200), then the control unit 300 executes a humidity decrease process illustrated in FIG. 2.

In the rainy season, the continuous rainy weather, or the season with high humidity such as the rainy weather, or after the end of a long-hours cooling or dehumidifying operation in summer, the humidity (the relative humidity) inside the indoor unit 200 already satisfies a high-humidity condition. In such a case, the control unit 300 may directly execute the humidity decrease process.

On the other hand, occasionally, the humidity (the relative humidity) inside the indoor unit 200 takes a normal value during the daytime or the humidity (the relative humidity) inside the indoor unit 200 is in a relatively dry state in a case where a heating operation is carried out for long hours in winter. In such a case, in carrying out a mold prevention operation, it is necessary to increase the humidity (i.e., transition to the humidity increase process) and then decrease the humidity (i.e., transition to the humidity decrease process) in order to produce an advantageous effect of mold prevention processing.

Therefore, the inside humidity decrease stage in the present invention is not intended to be interpreted in a narrower sense as including only a humidity decrease process of decreasing a humidity (a relative humidity) inside an air conditioner. Conversely, the inside humidity decrease stage in the present invention should be broadly defined in a broader sense as a stage that consequently decreases a humidity (a relative humidity) inside an air conditioner, that is, a stage that may non-exclusively include a humidity increase process of increasing a humidity (a relative humidity) inside an air conditioner for a specific purpose.

### (Humidity Increase Process)

In the humidity increase process (step S300), as illustrated in FIG. 3, when the control unit 300 determines in step 5200 that the relative humidity H1 inside the indoor unit 200 at the startup is lower than the preset value (e.g., the relative humidity of 80%) (i.e., the relative humidity H1 does not reach the preset value), that is, in a case of step S210 in FIG. 3, then the control unit 300 carries out step S310 (the cooling operation).

In step S310, the cooling operation is carried out in the same manner as that of an ordinary cooling operation to be carried out in the cooling operation mode as one of the ordinary operation modes of the air conditioning system 1. During the cooling operation, the control unit 300 controls the components including the compressor 101 to cause a refrigerant to flow into the refrigerant circuit. In this case, the indoor heat exchanger 201 functions as an evaporator. During the cooling operation, preferably, the control unit 300 intermittently operates the indoor fan 202; however, the indoor fan 202 does not necessarily rotate.

After carrying out step S310 (the cooling operation) for a predetermined time, in step S320, the control unit 300 stops the compressor 101. In step S330, next, the control unit 300 determines whether frost formation occurs in the indoor heat exchanger 201.

When the control unit 300 determines in step S330 that frost formation occurs in the indoor heat exchanger 201 ("YES" in step S330), then in step S331, the control unit 300 keeps the indoor fan 202 operating. The processing then proceeds to step S340. This configuration thus enables prompt defrosting and additionally achieves a prompt increase in inside humidity.

On the other hand, when the control unit 300 determines in step S330 that no frost formation occurs in the indoor heat exchanger 201 ("NO" in step S330), then in step S332, the control unit 300 stops the indoor fan 202. The processing then proceeds to step S340. Adjusting the operating state of the indoor fan 202 in accordance with the specific state of the indoor heat exchanger 201 improves control accuracy, achieves energy saving, advantageously stabilizes the air conditioning system 1, and ensures user's comfortability.

In step S340, the control unit 300 determines whether a humidity adjustment value H1' inside the indoor unit 200, which has been subjected to the humidity increase (step S310, step S320, step S330, and step S331 or 332) by a present predetermined cycle, reaches the preset value (i.e., the preset value (the relative humidity of 80%) in step S200).

When the control unit 300 determines in step S340 that the humidity adjustment value H1' inside the indoor unit 200 is still lower than the preset value (i.e., the humidity adjustment value H1' does not reach the preset value) ("NO" in step S340), the processing returns to step S310 in which the control unit 300 continuously executes the humidity increase by a subsequent predetermined cycle.

On the other hand, when the control unit 300 determines in step S340 that the humidity adjustment value H1' inside the indoor unit 200 is the preset value or more (i.e., the humidity adjustment value H1' reaches the preset value) ("YES" in step S340), then the control unit 300 executes the humidity decrease process illustrated in FIG. 2.

### (Humidity Decrease Process)

According to an example as an embodiment of the present invention, the humidity decrease process may include an air blowing operation (step S400) and a heat applying operation (step S500). The control unit 300 carries out step S400 (the air blowing operation) first. After executing step S400 (the air blowing operation) for a predetermined time, the control unit 300 then carries out step S500 (the heat applying operation). However, the present invention is not limited thereto. For example, the humidity decrease process does not necessarily include the heat applying operation (step S500), and may include only the air blowing operation (step S400).

In step S400, the air blowing operation may be equal in air blowing power to an ordinary air blowing operation to be carried out in the air blowing operation mode as one of the ordinary operation modes of the air conditioning system 1 or may be different in air blowing power from the ordinary air blowing operation after the air flow volume is adjusted by an air flow volume adjustment unit. For example, a powerful air blowing operation or a powerless air blowing operation can be mentioned. During the air blowing operation, the control unit 300 turns on the indoor fan 200 and controls the rotation of the indoor fan 202. However, since the control unit 300 controls the rotation while stopping the compressor 101, the refrigerant does not flow into the refrigerant circuit.

During the air blowing operation in this case, the control unit 300 controls a tilt angle of an air guide plate such that air blown out through an air blow-out port is not directly directed to a person in the room.

In step S500, the heat applying operation may achieve heat application in the same manner as that of an ordinary heating operation to be carried out in the heating operation mode as one of the ordinary operation modes of the air conditioning system 1 or may achieve heat application using a heat applying member, which is different from the ordinary heating operation. In a process of achieving heat application by the heating operation, the control unit 300 controls the components including the compressor 101 to cause the refrigerant to flow into the refrigerant circuit. In this case, the indoor heat exchanger 201 functions as a radiator. During the heat applying operation, preferably, the control unit 300 intermittently operates the indoor fan 202; however, the indoor fan 202 does not necessarily rotate.

By the inside humidity decrease stage ("humidity decrease process" or "humidity increase process + humidity decrease process"), in step S600, the control unit 300 decreases a relative humidity H from the relative humidity H1 at the startup to a target humidity H2 (also called "a relative humidity inside the indoor unit 200 subjected to humidity decrease by the inside humidity decrease stage") within a predetermined time T (e.g., one hour). The target humidity H2 is not more than 0.5 times the relative humidity H1 at the startup. That is, a relation of H2/H1 ≤ 0.5 is preferably established.

The air conditioning system control method according to the embodiment of the present invention includes the inside humidity decrease stage. At the inside humidity decrease stage, the control unit 300 acquires the relative humidity H1 inside the indoor unit 200 at the startup. The control unit 300 then controls the air conditioning system 1. When the relative humidity (H1) inside the indoor unit 200 at the startup is the preset value or more, the control unit 300 executes the humidity decrease process of decreasing the relative humidity inside the indoor unit 200 from the relative humidity H1 at the startup. The humidity decrease process includes the air blowing operation of blowing air out of the indoor unit 200 toward the room. By the inside humidity decrease stage, the relative humidity inside the indoor unit 200 is decreased to the target humidity H2 within the predetermined time T so that the ratio between the target humidity H2 and the relative humidity H1 at the startup, that is, the ratio of H2/H1 falls within the preset range that enables destruction of the propagation and survival environment of bacteria and mold. Therefore, true mold prevention inside the indoor unit 200 can be realized by decreasing the relative humidity inside the indoor unit 200 and destroying the propagation and survival environment of bacteria and mold. This configuration is different from a simple one-time cleaning after propagation of bacteria and mold.

In addition, since the indoor unit 200 is quickly dried before a mold cystoid spore germination period, the growth of mold is reset again. This configuration therefore inhibits germination of mold and considerably reduces the number of bacteria as compared with the number of bacteria in a case where an indoor unit is dried naturally.

According to the present invention, the control unit 300 causes, for example, the humidity sensor to detect the temperature inside the indoor unit 200 (the initial humidity H1, that is, the relative humidity at the startup, the humidity adjustment value H1' subjected to the humidity increase by the present predetermined cycle in the humidity increase process, or the relative humidity H in the humidity decrease process) in real time. This configuration enables an immediate response to a change in temperature inside the indoor unit 200, the change being fed back from the humidity sensor. This configuration thus improves control accuracy.

When the relative humidity H1 at the startup reaches the preset value (e.g., the relative humidity of 80%), the inside of the air conditioner at this time is already in the high-humidity state. The control unit 300 merely controls the air conditioning system 1 and starts to directly execute the humidity decrease process. Therefore, the control unit 300 does not need to execute the humidity increase process prior to the humidity decrease process. This configuration therefore efficiently achieves mold prevention and sterilization inside the indoor unit 200 in an energy-saved manner.

When the relative humidity H1 at the startup does not reach the preset value (e.g., the relative humidity of 80%), the inside of the air conditioner at this time is at a normal humidity and, in turn, is in a relatively dry state. In this case, although the inside humidity decrease process is executed, executing the humidity increase process and then executing the humidity decrease process may cause the ratio of H2/H1 to more advantageously fall within the preset range that enables destruction of the propagation and survival environment of bacteria and mold.

The ratio between the target humidity H2 at the inside humidity decrease stage (the target value of the relative humidity H) and the relative humidity H1 at the startup (the initial value of the relative humidity H), that is, the ratio of H2/H1 is 0.5 or less. Preferably, the ratio of H2/H1 is 0.4 to 0.5. This configuration therefore ensures an advantageous effect of mold prevention and improves control accuracy, without imposing an excessive load on the air conditioner.

The control unit 300 executes the cooling operation during which the indoor heat exchanger 201 functions as an evaporator, in the execution of the humidity increase process at the inside humidity decrease stage. Therefore, controlling the refrigerant that circulates in the refrigerant circuit by the compressor 101 achieves the humidity increase on the secondary side (the blow-out side) of the indoor heat exchanger 201, produces an advantageous effect of the humidity increase, and improves control accuracy.

The control unit 300 stops the compressor 101 in the execution of the humidity increase process at the inside humidity decrease stage. This configuration therefore achieves the humidity increase on the primary side (the suction side) of the indoor heat exchanger 201, that is, the humidity increase inside the entire indoor unit 200. This configuration thus ensures the advantageous effects of the mold prevention and sterilization.

The control unit 300 intermittently operates the indoor fan 202 during the execution of the humidity increase process at the inside humidity decrease stage. Alternatively, in the case of the cooling operation, the control unit 300 determines whether frost formation occurs in the indoor heat exchanger 201. When frost formation occurs in the indoor heat exchanger 201, the control unit 300 stops the indoor fan 202. When no frost formation occurs in the indoor heat exchanger 201, the control unit 300 continuously operates the indoor fan 202. This configuration therefore adequately mixes airflows inside the indoor unit and increases the humidity inside the entire air conditioner.

During the execution of the humidity decrease process at the inside humidity decrease stage, the control unit 300 carries out the air blowing operation to decrease the relative humidity inside the indoor unit 200. Alternatively, the control unit 300 carries out the air blowing operation and the heat applying operation. Carrying out the air blowing operation promptly and effectively decreases the humidity inside the indoor unit 200, which makes a user comfortable without increasing a temperature of air to be blown out of the indoor unit 200. On the other hand, carrying out the heat applying operation achieves further dry and mold prevention and produces more preferable advantageous effects of sterilization.

In the case of the heat applying operation, the control unit 300 intermittently operates the indoor fan 202. This configuration therefore increases a temperature difference in air to be blown out of the indoor unit 200 and prevents user's experience from being affected.

Those skilled in the art can easily conceive other advantages and modifications. In a broader sense, therefore, the present invention is not limited to the specific details and typical examples illustrated and described herein. The present invention may be modified without departing from the scope of the invention which is defined by the accompanying claims.

According to the embodiment of the present invention, in step S300 (the humidity increase process), the control unit 300 carries out the cooling operation (step S310), thereby increasing the humidity (the relative humidity) inside the indoor unit 200; however, the present invention is not limited to this example. In step S300 (the humidity increase process), for example, the control unit 300 may carry out a dehumidifying operation in the same manner as that of an ordinary dehumidifying operation to be carried out in the dehumidifying operation mode as one of the ordinary operation modes of the air conditioning system 1, thereby increasing the humidity (the relative humidity) inside the indoor unit 200. In step S300 (the humidity increase process), alternatively, the control unit 300 may increase the humidity (the relative humidity), using a humidifying member so as to differ from the cooling operation mode or dehumidifying operation mode as one of the ordinary operation modes.

In increasing the humidity (the relative humidity) by executing the dehumidifying operation or using the humidifying member, step S310 and step S340 are merely suspended in step S300 (the humidity increase process) indicated by a broken line in FIG. 3. In step S310, the control unit 300 increases the humidity by executing the dehumidifying operation or using the humidifying member. In step S340, the control unit 300 determines whether the humidity adjustment value H1' inside the indoor unit 200 reaches the preset value.

In the foregoing example, the preset condition is that the relative humidity inside the indoor unit reaches the predetermined value. The humidity sensor is disposed inside the indoor unit. Preferably, the humidity sensor is disposed near the indoor heat exchanger. For example, when the humidity sensor is placed at a position distant by 2 cm from the upstream or downstream side of the indoor heat exchanger on the airflow path, the humidity sensor is capable of directly and accurately detecting the inside humidity. When the inside relative humidity is in the high-humidity state, the control unit 300 may start to carry out the mold prevention operation.

The preset condition is that a humidity of indoor air reaches a predetermined value. For example, in an environment such as the rainy season or the continuous rainy weather, a humidity of air is in a high-humidity state. When the humidity sensor detects an indoor humidity of 75% or more, the control unit 300 may start to carry out the mold prevention operation.

The preset condition is that an integrated operating time of the cooling or dehumidifying operation reaches a predetermined value. In summer, when the air conditioner frequently carries out the cooling operation or the dehumidifying operation, condensate is retained inside the indoor unit without fail. When the operating time is integrated for a certain period, mold and bacteria tend to propagate. The control unit 300 may start to carry out the mold prevention operation at this timing.

The preset condition is that an integrated time of continuous increase in environmental temperature reaches a predetermined value. For example, when the control unit 300 determines from detection of the environmental temperature that mold and bacteria tend to propagate in the high-temperature and high-humidity season (summer), then the control unit 300 may start to carry out the mold prevention operation.

In the foregoing example, the humidity sensor may be placed on the suction port in the indoor unit. The humidity sensor detects a return air humidity in the room. The humidity sensor calculates a dew-point temperature based on a temperature and humidity of the return air in the room. In addition, the humidity sensor calculates a water content based on an indoor heat cross area S and a difference ΔT between the dew-point temperature and an evaporation temperature of the indoor heat exchanger. The humidity sensor thus estimates an inside relative humidity. Moreover, when the humidity sensor is placed on the blow-out port in the indoor unit, the humidity sensor detects a relative humidity value of an airflow blown out through the blow-out port. The humidity sensor thus determines whether the inside humidity at the humidity increase stage is in a high-humidity state or whether the inside humidity at the humidity decrease stage is decreased to a target humidity.

The air conditioning system may further include a detection unit that is disposed at a given position in a room and includes a humidity sensor configured to detect a humidity of the room. The air conditioning system may further include another air processing apparatus equipped with a humidity sensor, for example, a dehumidifier. In this case, the control unit adjusts an operating state of one of the indoor unit and the dehumidifier or operating states of both the indoor unit and the dehumidifier, based on detection data of the humidity sensor.

## Claims

1. An air conditioning system control method for controlling an air conditioning system (1) including an outdoor unit (100), an indoor unit (200), and a control unit (300), the outdoor unit (100) including a compressor (101) and an outdoor heat exchanger (103), the indoor unit (200) including an indoor heat exchanger (201), the compressor (101), the outdoor heat exchanger (103), and the indoor heat exchanger (201) being connected with pipes to constitute a refrigerant circuit in which a refrigerant circulates, the control unit (300) being configured to control constituent members of the refrigerant circuit in the air conditioning system (1) and to execute a mold prevention operation mode,
wherein
the mold prevention operation mode includes an inside humidity decrease stage,
at the inside humidity decrease stage, when a preset condition is satisfied, the control unit (300) controls the air conditioning system (1) and starts up a humidity decrease process of decreasing a relative humidity,
the humidity decrease process includes an air blowing operation of blowing air out of the indoor unit (200) toward a room, **characterized in that**
by the inside humidity decrease stage, a relative humidity (H) inside the indoor unit (200) is decreased within a predetermined time (T) such that a ratio between the relative humidity (H) and a relative humidity (H1) before the inside humidity decrease stage falls within a preset range that enables destruction of propagation and a survival environment of bacteria and mold;
wherein the preset condition includes one of or at least two of a condition that the relative humidity inside the indoor unit reaches a predetermined value, a condition that a humidity of indoor air reaches a predetermined value, a condition that an integrated operating time of a cooling operation or a dehumidifying operation reaches a predetermined value, and a condition that an integrated time of continuous increase in environmental temperature reaches a predetermined value.

2. The air conditioning system control method according to claim 1, wherein
the inside humidity decrease stage of the mold prevention operation mode further includes a humidity increase process of increasing a humidity inside the indoor unit (200), and
when the relative humidity (H1) before the inside humidity decrease stage is lower than a preset value, at the inside humidity decrease stage, the humidity increase process is executed, and then the humidity decrease process is executed.

3. The air conditioning system control method according to claim 2, wherein
the humidity increase process includes a cooling operation, and
during the cooling operation, the control unit (300) controls the constituent members of the refrigerant circuit, including the compressor (101), to cause the indoor heat exchanger (201) to function as an evaporator.

4. The air conditioning system control method according to claim 3, wherein
the humidity increase process further includes a step of stopping the compressor (101) after a lapse of the predetermined time.

5. The air conditioning system control method according to claim 4, wherein
when the compressor (101) stops, the control unit (300) intermittently operates the indoor fan (202) of the indoor unit (200).

6. The air conditioning system control method according to claim 4, wherein
the humidity increase process further includes a step of determining whether frost formation occurs in the indoor heat exchanger (201) in a case of the cooling operation,
when frost formation occurs in the indoor heat exchanger (201), the indoor fan (202) of the indoor unit (200) is continuously operated, and/or
when no frost formation occurs in the indoor heat exchanger (201), the indoor fan (202) of the indoor unit (200) is stopped.

7. The air conditioning system control method according to claim 6, wherein
the humidity decrease process further includes a heat applying operation, and
during the heat applying operation, the control unit (300) controls the constituent members of the refrigerant circuit, including the compressor (101), to apply heat by causing the indoor heat exchanger (201) to function as a condenser or the control unit (300) controls a heat applying member to apply heat.

8. The air conditioning system control method according to claim 7, wherein
during the heat applying operation, the control unit (300) intermittently operates the indoor fan (202) of the indoor unit (200).

9. The air conditioning system control method according to claim 1, wherein
the relative humidity (H) inside the indoor unit (200) is decreased to be not more than 0.5 times the relative humidity (H1) before the inside humidity decrease stage, within the predetermined time (T).

10. The air conditioning system control method according to claim 1, wherein
the air conditioning system further includes a humidity sensor, and the humidity sensor is disposed near the indoor heat exchanger (201), near a suction port in the indoor unit (200), near a blow-out port in the indoor unit (200), or in a space to be adjusted.

11. The air conditioning system control method according to any one of claims 1 to 10, wherein
the air conditioning system (1) includes a plurality of the indoor units (200), and at least one of or all the indoor units (200) executes or execute the mold prevention operation mode.

12. The air conditioning system control method according to claim 11, wherein
when at least one of the indoor units (200) which is an operative device executes the mold prevention operation mode, the remaining indoor units (200) which are non-operative devices stop operating.

13. The air conditioning system control method according to claim 11, wherein
the air conditioning system (1) starts up the mold prevention operation mode of a non-operative device among the plurality of indoor units (200) and/or ends the mold prevention operation mode of an operative device among the plurality of indoor units (200), based on a received command.

14. The air conditioning system control method according to any one of claims 1 to 10, 12, and 13, wherein
the control unit (300) of the air conditioning system (1) includes an external control device that displays an operating state in the mold prevention operation mode.

## Patentansprüche

1. Klimaanlagensteuerungsverfahren zum Steuern einer Klimaanlage (1), die eine Außeneinheit (100), eine Inneneinheit (200) und eine Steuereinheit (300) einschließt, wobei die Außeneinheit (100) einen Kompressor (101) und einen Außenwärmetauscher (103) einschließt, die Inneneinheit (200) einen Innenwärmetauscher (201) einschließt, wobei der Kompressor (101), der Außenwärmetauscher (103) und der Innenwärmetauscher (201) mit Rohren verbunden sind, um einen Kältemittelkreislauf zu bilden, in dem ein Kältemittel zirkuliert, wobei die Steuereinheit (300) dazu konfiguriert ist, Komponenten des Kältemittelkreislaufs in der Klimaanlage (1) zu steuern und einen Schimmelverhinderungsbetriebsmodus auszuführen,
wobei
der Schimmelverhinderungsbetriebsmodus eine Innenfeuchtigkeitsverringerungsstufe einschließt,
wobei in der Innenfeuchtigkeitsverringerungsstufe, wenn eine voreingestellte Bedingung erfüllt ist, die Steuereinheit (300) die Klimaanlage (1) steuert und einen Feuchtigkeitsverringerungsprozess zum Verringern einer relativen Feuchtigkeit startet,
wobei der Feuchtigkeitsverringerungsprozess einen Luftblasbetrieb zum Ausblasen von Luft aus der Inneneinheit (200) in einen Raum einschließt, **dadurch gekennzeichnet ist, dass**
durch die Innenfeuchtigkeitsverringerungsstufe eine relative Feuchtigkeit (H) innerhalb der Inneneinheit (200) innerhalb einer vorbestimmten Zeit (T) verringert wird, sodass ein Verhältnis zwischen der relativen Feuchtigkeit (H) und einer relativen Feuchtigkeit (H1) vor der Innenfeuchtigkeitsverringerungsstufe in einen voreingestellten Bereich fällt, der die Zerstörung der Ausbreitung und einer Überlebensumgebung von Bakterien und Schimmel ermöglicht;
wobei die voreingestellte Bedingung eine oder mindestens zwei der folgenden Bedingungen einschließt: eine Bedingung, dass die relative Feuchtigkeit in der Inneneinheit einen vorbestimmten Wert erreicht, eine Bedingung, dass eine Feuchtigkeit der Innenluft einen vorbestimmten Wert erreicht, eine Bedingung, dass eine integrierte Betriebszeit eines Kühlbetriebs oder eines Entfeuchtungsbetriebs einen vorbestimmten Wert erreicht, und eine Bedingung, dass eine integrierte Zeit eines kontinuierlichen Anstiegs der Umgebungstemperatur einen vorbestimmten Wert erreicht.

2. Klimaanlagensteuerungsverfahren nach Anspruch 1, wobei
die Innenfeuchtigkeitsverringerungsstufe des Schimmelverhinderungsbetriebsmodus weiter einen Feuchtigkeitserhöhungsprozess der Erhöhung einer Feuchtigkeit innerhalb der Inneneinheit (200) einschließt, und
wenn die relative Feuchtigkeit (H1) vor der Innenfeuchtigkeitsverringerungsstufe niedriger als ein voreingestellter Wert ist, in der Innenfeuchtigkeitsverringerungsstufe der Feuchtigkeitserhöhungsprozess ausgeführt wird und dann der Feuchtigkeitsverringerungsprozess ausgeführt wird.

3. Klimaanlagensteuerungsverfahren nach Anspruch 2, wobei
der Feuchtigkeitserhöhungsprozess einen Abkühlbetrieb einschließt, und
die Steuereinheit (300) während des Abkühlbetriebs die Komponenten des Kältemittelkreislaufs einschließlich des Kompressors (101) steuert, um den Innenwärmetauscher (201) zu veranlassen, als Verdampfer zu arbeiten.

4. Klimaanlagensteuerungsverfahren nach Anspruch 3, wobei
der Feuchtigkeitserhöhungsprozess weiter einen Schritt des Anhaltens des Kompressors (101) nach Ablauf der vorbestimmten Zeit einschließt.

5. Klimaanlagensteuerungsverfahren nach Anspruch 4, wobei
wenn der Kompressor (101) anhält, die Steuereinheit (300) den Innenventilator (202) der Inneneinheit (200) intermittierend betreibt.

6. Klimaanlagensteuerungsverfahren nach Anspruch 4, wobei
der Feuchtigkeitserhöhungsprozess weiter einen Schritt einschließt, in dem festgestellt wird, ob im Falle des Abkühlbetriebs Frostbildung in dem Innenwärmetauscher (201) auftritt,
bei Auftreten von Frostbildung im Innenwärmetauscher (201) der Innenventilator (202) der Inneneinheit (200) kontinuierlich betrieben wird, und/oder
bei keinem Auftreten von Frostbildung im Innenwärmetauscher (201) der Innenventilator (202) der Inneneinheit (200) angehalten wird.

7. Klimaanlagensteuerungsverfahren nach Anspruch 6, wobei
der Feuchtigkeitsverringerungsprozess weiter einen Wärmezufuhrbetrieb einschließt, und
die Steuereinheit (300) während des Wärmezufuhrbetriebs die Komponenten des Kältemittelkreislaufs einschließlich des Kompressors (101) steuert, um Wärme zuzuführen, indem sie den Innenwärmetauscher (201) veranlasst, als Kondensator zu arbeiten, oder die Steuereinheit (300) ein Wärmezufuhrelement steuert, um Wärme zuzuführen.

8. Klimaanlagensteuerungsverfahren nach Anspruch 7, wobei
die Steuereinheit (300) während des Wärmezufuhrbetriebs den Innenventilator (202) der Inneneinheit (200) intermittierend betreibt.

9. Klimaanlagensteuerungsverfahren nach Anspruch 1, wobei
die relative Feuchtigkeit (H) in der Inneneinheit (200) innerhalb der vorbestimmten Zeit (T) auf nicht mehr als das 0,5-Fache der relativen Feuchtigkeit (H1) vor der Innenfeuchtigkeitsverringerungsstufe verringert wird.

10. Klimaanlagensteuerungsverfahren nach Anspruch 1, wobei
die Klimaanlage weiter einen Feuchtigkeitssensor einschließt, und der Feuchtigkeitssensor in der Nähe des Innenwärmetauschers (201), in der Nähe einer Ansaugöffnung in der Inneneinheit (200), in der Nähe einer Ausblasöffnung in der Inneneinheit (200) oder in einem anzupassenden Raum angeordnet ist.

11. Klimaanlagensteuerungsverfahren nach einem der Ansprüche 1 bis 10, wobei
die Klimaanlage (1) eine Vielzahl von Inneneinheiten (200) einschließt, und mindestens eine oder alle Inneneinheiten (200) den Schimmelverhinderungsbetriebsmodus ausführt oder ausführen.

12. Klimaanlagensteuerungsverfahren nach Anspruch 11, wobei
wenn mindestens eine der Inneneinheiten (200), die eine operative Vorrichtung ist, den Schimmelverhinderungsbetriebsmodus ausführt, die übrigen Inneneinheiten (200), die nicht-operative Vorrichtungen sind, den Betrieb beenden.

13. Klimaanlagensteuerungsverfahren nach Anspruch 11, wobei
die Klimaanlage (1) den Schimmelverhinderungsbetriebsmodus einer nichtoperativen Vorrichtung unter der Vielzahl von Inneneinheiten (200) startet und/oder den Schimmelverhinderungsbetriebsmodus einer operativen Vorrichtung unter der Vielzahl von Inneneinheiten (200) beendet, basierend auf einem empfangenen Befehl.

14. Klimaanlagensteuerungsverfahren nach einem der Ansprüche 1 bis 10, 12 und 13, wobei
die Steuereinheit (300) der Klimaanlage (1) eine externe Steuervorrichtung einschließt, die einen Betriebszustand im Schimmelverhinderungsbetriebsmodus anzeigt.

## Revendications

1. Procédé de commande de système de climatisation pour commander un système de climatisation (1) incluant une unité extérieure (100), une unité intérieure (200), et une unité de commande (300), l'unité extérieure (100) incluant un compresseur (101) et un échangeur de chaleur extérieur (103), l'unité intérieure (200) incluant un échangeur de chaleur intérieur (201), le compresseur (101), l'échangeur de chaleur extérieur (103), et l'échangeur de chaleur intérieur (201) étant relié avec des tuyaux pour constituer un circuit réfrigérant dans lequel un fluide frigorigène circule, l'unité de commande (300) étant configurée pour commander des éléments constitutifs du circuit réfrigérant dans le système de climatisation (1) et pour mettre en oeuvre un mode d'opération de prévention de moisissures,
dans lequel
le mode d'opération de prévention de moisissures inclut une étape de réduction d'humidité intérieure,
lors de l'étape de réduction d'humidité intérieure, lorsqu'une condition prédéfinie est satisfaite, l'unité de commande (300) commande le système de climatisation (1) et lance un processus de réduction d'humidité consistant à réduire une humidité relative,
le processus de réduction d'humidité inclut une opération de soufflage d'air consistant à souffler de l'air en dehors de l'unité intérieure (200) vers une pièce, **caractérisé en ce que**
par l'étape de réduction d'humidité intérieure, une humidité relative (H) à l'intérieur de l'unité intérieure (200) est réduite dans un temps prédéterminé (T) de sorte qu'un rapport entre l'humidité relative (H) et une humidité relative (H1) avant l'étape de réduction d'humidité intérieure soit compris dans une plage prédéfinie qui permet une destruction d'une propagation et d'un environnement de survie de bactéries et de moisissures ;
dans lequel la condition prédéfinie inclut une condition ou au moins deux conditions parmi une condition selon laquelle l'humidité relative à l'intérieur de l'unité intérieure atteint une valeur prédéterminée, une condition selon laquelle une humidité d'air intérieur atteint une valeur prédéterminée, une condition selon laquelle un temps de fonctionnement intégré d'une opération de refroidissement ou d'une opération de déshumidification atteint une valeur prédéterminée, et une condition selon laquelle un temps intégré d'augmentation continue d'une température d'environnement atteint une valeur prédéterminée.

2. Procédé de commande de système de climatisation selon la revendication 1, dans lequel
l'étape de réduction d'humidité intérieure du mode d'opération de prévention de moisissures inclut en outre un processus d'augmentation d'humidité consistant à augmenter une humidité à l'intérieur de l'unité intérieure (200), et
lorsque l'humidité relative (H1) avant l'étape de réduction d'humidité intérieure est inférieure à une valeur prédéfinie, lors de l'étape de réduction d'humidité intérieure, le processus d'augmentation d'humidité est mis en oeuvre, et ensuite le processus de réduction d'humidité est mis en oeuvre.

3. Procédé de commande de système de climatisation selon la revendication 2, dans lequel
le processus d'augmentation d'humidité inclut une opération de refroidissement, et
pendant l'opération de refroidissement, l'unité de commande (300) commande les éléments constitutifs du circuit réfrigérant, incluant le compresseur (101), pour amener l'échangeur de chaleur intérieur (201) à fonctionner en tant qu'évaporateur.

4. Procédé de commande de système de climatisation selon la revendication 3, dans lequel
le processus d'augmentation d'humidité inclut en outre une étape consistant à arrêter le compresseur (101) après un laps du temps prédéterminé.

5. Procédé de commande de système de climatisation selon la revendication 4, dans lequel
lorsque le compresseur (101) s'arrête, l'unité de commande (300) fait fonctionner par intermittence le ventilateur intérieur (202) de l'unité intérieure (200).

6. Procédé de commande de système de climatisation selon la revendication 4, dans lequel
le processus d'augmentation d'humidité inclut en outre une étape consistant à déterminer si une formation de givre se produit dans l'échangeur de chaleur intérieur (201) dans un cas de l'opération de refroidissement,
lorsqu'une formation de givre se produit dans l'échangeur de chaleur intérieur (201), le ventilateur intérieur (202) de l'unité intérieure (200) est mis en fonctionnement en continu, et/ou
lorsqu'aucune formation de givre ne se produit dans l'échangeur de chaleur intérieur (201), le ventilateur intérieur (202) de l'unité intérieure (200) est arrêté.

7. Procédé de commande de système de climatisation selon la revendication 6, dans lequel
le processus de réduction d'humidité inclut en outre une opération d'application de chaleur, et
au cours de l'opération d'application de chaleur, l'unité de commande (300) commande les éléments constitutifs du circuit réfrigérant, incluant le compresseur (101), pour appliquer de la chaleur en amenant l'échangeur de chaleur intérieur (201) à fonctionner en tant que condenseur, ou l'unité de commande (300) commande un élément d'application de chaleur pour appliquer de la chaleur.

8. Procédé de commande de système de climatisation selon la revendication 7, dans lequel
au cours de l'opération d'application de chaleur, l'unité de commande (300) fait fonctionner par intermittence le ventilateur intérieur (202) de l'unité intérieure (200).

9. Procédé de commande de système de climatisation selon la revendication 1, dans lequel
l'humidité relative (H) à l'intérieur de l'unité intérieure (200) est réduite pour ne pas être supérieure à 0,5 fois l'humidité relative (H1) avant l'étape de réduction d'humidité intérieure, dans le temps prédéterminé (T).

10. Procédé de commande de système de climatisation selon la revendication 1, dans lequel
le système de climatisation comporte en outre un capteur d'humidité, et le capteur d'humidité est disposé à proximité de l'échangeur de chaleur intérieur (201), à proximité d'un orifice d'aspiration dans l'unité intérieure (200), à proximité d'un orifice de soufflage dans l'unité intérieure (200), ou dans un espace à ajuster.

11. Procédé de commande de système de climatisation selon l'une quelconque des revendications 1 à 10, dans lequel
le système de climatisation (1) inclut une pluralité des unités intérieures (200), et au moins une unité intérieure ou la totalité des unités intérieures (200) met en oeuvre ou mettent en oeuvre le mode d'opération de prévention de moisissures.

12. Procédé de commande de système de climatisation selon la revendication 11, dans lequel
lorsqu'au moins une des unités intérieures (200) qui est un dispositif fonctionnel met en oeuvre le mode d'opération de prévention de moisissures, les unités intérieures (200) restantes qui sont des dispositifs non fonctionnels s'arrêtent de fonctionner.

13. Procédé de commande de système de climatisation selon la revendication 11, dans lequel
le système de climatisation (1) lance le mode d'opération de prévention de moisissures d'un dispositif non fonctionnel parmi la pluralité d'unités intérieures (200) et/ou met fin au mode d'opération de prévention de moisissures d'un dispositif fonctionnel parmi la pluralité d'unités intérieures (200), sur la base d'une commande reçue.

14. Procédé de commande de système de climatisation selon l'une quelconque des revendications 1 à 10, 12, et 13, dans lequel
l'unité de commande (300) du système de climatisation (1) inclut un dispositif de commande externe qui affiche un état de fonctionnement dans le mode d'opération de prévention de moisissures.
